# FASCICULE DE BREVET EUROPEEN

(11) **EP 4 763 822 B1**
(45) Date de publication et mention de la délivrance du brevet: **18.11.2026**
(21) Numéro de dépôt: 25222633.7
(22) Date de dépôt: 11.12.2025
(51) Int. Cl.: C04B 20/04, C04B 28/14

(54) **PERLITE EXPANSÉE POUR UNE COMPOSITION QUI COMPREND DU PLÂTRE**
EXPANDIERTES PERLIT FÜR EINE GIPSHALTIGE ZUSAMMENSETZUNG
EXPANDED PERLITE FOR A COMPOSITION COMPRISING PLASTER

(30) Priorité: 20.12.2024 BE 202405914
(43) Date de publication de la demande: 24.06.2026
(73) Titulaire: N. et B. Knauf et Cie. SComm, 4480 Engis (BE)
(72) Inventeur: HALLET, Xavier, 4480 Engis (BE); BRASSEUR, Alain, 4480 Engis (BE)
(74) Mandataire: Calysta NV

(56) Documents cités:
- EP-B1- 2 444 460
- CN-A- 1 583 382
- CN-U- 220 567 819
- RU-C1- 2 502 594
- DA LIN: "What is the Purpose of Vertical Bucket Elevator? | LinkedIn", 27 September 2024 (2024-09-27), XP093291208, Retrieved from the Internet <URL:https://www.linkedin.com/pulse/what-purpose-vertical-bucket-elevator-da-lin-hbkcc/> [retrieved on 20250701]

## Description

La présente invention se rapporte à un procédé pour transporter des billes de perlite expansée, à un dispositif et à l'utilisation de billes de perlite dans une composition qui comprend du plâtre.

La perlite est une roche volcanique amorphe, principalement composée de silice, qui se forme lorsque la lave refroidit rapidement en présence d'eau. Elle appartient à la catégorie des verres volcaniques et présente une teneur élevée en eau (environ 2 à 5 % en poids). Cette caractéristique lui confère des propriétés uniques lorsqu'elle est soumise à un traitement thermique.

Le traitement thermique à haute température de la perlite naturelle conduit à la formation de billes de perlite expansée.

La perlite expansée est un matériau largement utilisé en milieu industriel pour ses propriétés d'isolation thermique, de légèreté et de rétention d'eau. Les billes de perlite expansée présentent une structure alvéolaire qui lui confère une densité très faible et une porosité élevée. Toutefois, cette structure poreuse, bien que bénéfique pour de nombreuses applications, est également à l'origine de sa grande fragilité.

De plus, en fonction de l'origine de la perlite à l'état naturel, le traitement thermique appliqué peut conduire à la formation de billes de perlite encore plus fragiles par rapport à d'autres perlites traitées thermiquement, ce qui peut complexifier leur transport et de facto réduire leurs effets lorsqu'elles sont intégrées dans des produits, comme une composition qui comprend du plâtre.

En raison de cette fragilité, le transport de la perlite expansée représente un défi logistique majeur dans le secteur industriel. Sous l'effet des vibrations, des chocs et des pressions durant la manutention et le transport, la perlite expansée a tendance à se désagréger en fines particules / fragments, entraînant une perte de volume et de performance du matériau lorsque celui-ci est ajouté à une composition. Cette dégradation peut réduire son efficacité pour les applications finales, notamment pour des enduits légers, de mortiers isolants ou de plaques de plâtre renforcées, et ainsi augmenter les coûts liés au gaspillage ou au besoin de renfort de conditionnement.

De plus, sa faible densité entraîne une occupation importante du volume des camions ou conteneurs, ce qui complique davantage son transport en grandes quantités et accroît les coûts logistiques. Ainsi, le transport en usine ou sur de longues distances de la perlite expansée nécessite des méthodes adaptées pour minimiser les dommages mécaniques et garantir l'intégrité du matériau jusqu'à son point d'utilisation.

Généralement, les industriels peuvent utiliser des vis d'Archimède pour transporter les billes de perlite expansée qui restent peu efficaces en ce qu'elles peuvent casser les billes de perlite expansée.

CN220567819 décrit un procédé d'expansion de la perlite dans un four vertical. La perlite est expansée et les fines particules sont séparées. Le produit est ensuite transporté à l'aide d'un élévateur à godets.

De plus, il est connu d'utiliser un transport pneumatique qui nécessite l'application d'une certaine pression pour souffler les billes de perlite expansée le long des parois du conteneur. Toutefois, cela créé de la friction sur les parois du conteneur ce qui rompt une partie des billes de perlite expansée. Une perte de matière, à valeur ajoutée, se produit en cours de route ce qui a un impact sur les rendements de production et coût de l'installation industrielle.

Pour ces raisons, il existe un réel besoin de fournir un procédé pour transporter des billes de perlite expansée en assurant un transport efficace sur site industriel afin de permettre un usage avec une grande quantité de matière, tout en minimisant au maximum les pertes générées liées à la formation de fragments de billes de perlite dont la faible porosité est peu avantageuse pour l'utilisateur.

Pour résoudre ce problème, la présente invention fournit un procédé pour transporter des billes de perlite expansée prévues pour une composition qui comprend du plâtre, ledit procédé comprenant les étapes suivantes :
- Approvisionnement de perlite crue dans un four muni d'une flamme qui est située en partie basse du four et qui présente une température comprise entre 900 et 1400 °C, de préférence environ 1200 °C,
- Mise en contact de ladite perlite crue approvisionnée avec ladite flamme dudit four avec formation d'un flux de gaz ascendant par rapport au sens d'approvisionnement de ladite perlite crue,
- Chauffage de ladite perlite crue jusqu'à ce qu'elle atteigne une température comprise entre 700 et 760 °C, de préférence une température comprise entre 720 et 740 °C, formant des billes de perlite expansée et une fraction fine, par rapport auxdites billes de perlite expansée, et entrainement desdites billes de perlite expansée et de ladite fraction fine par ledit flux de gaz formé vers la partie haute du four, située à l'opposé de ladite flamme,
- Séparation granulométrique entre lesdites billes de perlite expansée et ladite fraction fine,
- Collecte desdites billes de perlite expansée et transport de celles-ci sur un élévateur muni d'au moins une chaîne à godets jusqu'à un silo de réception où lesdites billes de perlite sont prêtes à usage, caractérisé en ce que ledit procédé est mis en œuvre de façon que l'étape de transport des billes de perlite expansée soit réalisée au moyen d'un élévateur muni d'au moins une chaîne à godets s'étendant sur au moins trois zones de transport définies par rapport au niveau du sol, dont une première zone plane ou ascendante, une deuxième zone plane et une troisième zone descendante, la troisième zone étant reliée au silo de réception.

La perlite crue est ainsi approvisionnée dans la partie haute dudit four et atteint la partie basse du four pour permettre la mise en contact avec la flamme.

La perlite crue est ensuite chauffée pour permettre son expansion en billes de perlite qui constitue la matière d'intérêt. La température permet de réaliser la conversion souhaitée au vu des propriétés ciblées, particulièrement lorsqu'elles sont ajoutées à une composition qui comprend du plâtre.

Cela génère un flux de gaz qui comprend préférentiellement de l'air et des gaz à combustion, ledit flux remonte ainsi vers le sommet du four, en partie haute de celui-ci, et entraîne avec lui les billes de perlite expansée et la fraction fine. Cette fraction fine peut comprendre des fines particules et des poussières qui ont été générées lors de l'étape de chauffe de la perlite crue. Elle est caractérisée comme étant fine par rapport à la taille des billes de perlite expansée.

L'étape de séparation granulométrique permet de récupérer les billes de perlite expansée d'une part, et une fraction fine, d'autre part. La collecte des billes de perlite peut ainsi avoir lieu, par exemple à l'aide d'une trémie de collecte.

Ensuite, le transport est directement réalisé, de manière avantageuse en continu dans le procédé de façon à pouvoir préparer les billes de perlite à leur utilisation finale.

Il a été constaté que le fait d'avoir recours à un élévateur muni d'au moins une chaîne à godets permet d'assurer un transport en continu et stable sans risquer de détruire les billes de perlite qui pourront atteindre le silo de réception. Ainsi, des quantités déterminées de billes de perlite expansée peuvent être transportée par ledit élévateur vers le silo de réception tout en garantissant que la structure des billes de perlite expansée reste conservée.

Ainsi, la présente invention permet de fournir un produit final directement utilisable sur site industriel en prévoyant de manière sûre et efficace l'expansion de perlite crue, le transport de billes de perlite expansée et avantageusement le mélange avec une composition prévue pour le génie civile, la construction...

L'application finale peut inclure les enduits légers, des mortiers isolants ou des plaques de plâtre (renforcées) ou tout matériau pouvant être mélangé avec des billes de perlite expansée.

Ce procédé est donc particulièrement avantageux pour l'utilisateur qui souhaite intégrer toutes ces étapes au sein d'un même site de production.

L'invention permet de transporter sur site industriel des billes de perlite expansée extrêmement fragiles en limitant la casse, tout en maintenant un rendement matière élevé entre la perlite crue introduite et les billes expansées prêtes à l'emploi, et en permettant leur intégration contrôlée dans une composition de plâtre.

Le procédé selon l'invention demande peu de manutention et présente une rentabilité améliorée par rapport aux procédés connus. Ainsi, la proportion entre la quantité de perlite crue traitée thermiquement et la quantité de billes de perlite formées qui arrivent jusqu'au silo de réception est comprise entre 0,89 et 1, de préférence entre 0,95 et 1. Cela est particulièrement surprenant et permet d'avoir une perte de matière minimale.

Cela est particulièrement avantageux étant donné que l'ajout de perlite dans un produit final, par exemple une composition qui comprend du plâtre va permettre d'obtenir une légèreté du matériau final. Si le plâtre est à projeter sur un mur, il est préféré de pouvoir assurer qu'une quantité maximale de perlite initialement ajoutée soit encore présente dans le plâtre tout en ayant ses fonctions poreuse et légère lors de l'application. Son activité est ainsi utile pour pouvoir bénéficier de ses propriétés.

L'enjeu consiste à maîtriser toutes les étapes de traitement du produit de départ, en l'espèce, la perlite crue jusqu'à son arrivée au silo de réception pour permettre un usage de qualité avec les besoins spécifiques du marché.

Selon un mode préféré, l'étape d'approvisionnement est réalisée dans un module d'approvisionnement qui comprend une trémie munie d'une vanne rotative qui est agencée pour libérer une quantité prédéfinie de perlite crue, ladite trémie étant suivie d'une paroi vibrante descendante vers la partie basse dudit four et dont une partie s'étend dans ledit four.

De manière préférée, l'étape de séparation granulométrique est réalisée dans un module de séparation dont une partie est reliée audit élévateur, de préférence au moyen d'une trémie de collecte des billes de perlite expansée. En effet, le module de séparation peut comprendre une cuve de réception de ladite fraction fine et du flux de gaz. Le module de séparation peut être relié à un module de collecte qui comprend la trémie de collecte pour récupérer les billes de perlite expansée qui seront dirigées vers un module de transport qui comprend ledit élévateur muni d'au moins une chaîne à godets et le silo de réception.

Plus avantageusement, le module de collecte qui peut comprendre la trémie de collecte de billes de perlite expansée est relié à un module de transport qui comprend ledit élévateur muni d'au moins une chaîne à godets et le silo de réception.

Le procédé est mis en œuvre de façon que l'étape de transport des billes de perlite expansée soit réalisée au moyen d'un élévateur muni d'au moins une chaîne à godets s'étendant sur au moins trois zones de transport définies par rapport au niveau du sol, dont une première zone plane ou ascendante, une deuxième zone plane et une troisième zone descendante, la troisième zone étant reliée au silo de réception.

De cette façon, il est possible de réaliser l'étape d'expansion pour former les billes de perlite et les récupérer avec toutes les précautions nécessaires grâce au procédé selon l'invention.

De façon plus préférée, le procédé est mis en œuvre de façon que l'étape de transport des billes de perlite expansée soit réalisée au moyen d'un élévateur muni d'au moins une chaîne à godets s'étendant sur quatre zones de transport définies par rapport au niveau du sol, dont une première zone plane, une deuxième zone ascendante, une troisième zone plane et une quatrième zone descendante, la quatrième zone étant reliée au silo de réception.

Avantageusement, ladite perlite crue présente un temps de séjour dans ledit four compris entre 0,1 et 10 secondes, de préférence entre 0,1 et 8 secondes, plus préférentiellement entre 0,1 et 5 secondes, correspondant au temps passé dans ledit four, de préférence jusqu'à atteindre le sommet, en partie haute, de celui-ci.

Cela permet de traiter la perlite crue de manière efficace tout en réalisant l'expansion afin de fournir des billes de perlite présentant les propriétés souhaitées.

Plus préférentiellement, l'étape de chauffage de ladite perlite crue est mise en œuvre de façon que les billes de perlite expansée formées et entraînées par ledit flux de gaz jusqu'à la partie haute du four présentent, à leur arrivée en partie haute dudit four, une température comprise entre 630 et 720 °C, de préférence entre 640 et 700 °C, plus préférentiellement entre 645 et 665 °C, de préférence en sortie dudit four.

Cela permet de récupérer les billes de perlite expansée à un état plus froid. Ainsi, un refroidissement lent est opéré et une expansion contrôlée des billes de perlite est assurée.

Plus avantageusement, la perlite crue est approvisionnée dans un four vertical.

Ainsi, le four présente une partie basse qui comprend la flamme et une partie haute qui permet d'approvisionner le four en perlite crue et qui sort aussi de sortie pour le flux de gaz et la fraction fine qui remontent, à l'opposé de la flamme.

Selon un mode préféré, ladite séparation est réalisée avec un séparateur prévu pour simuler un vortex ou avec un séparateur à cyclone. Cela permet de réaliser une séparation granulométrique de qualité afin de récupérer les billes de perlite formant la matière d'intérêt. Cette étape est avantageuse en ce qu'elle maintient la structure des billes de perlite sans les endommager.

Selon un mode particulièrement préféré, l'approvisionnement de ladite perlite crue dans ledit four est réalisé de manière contrôlée au moyen d'une trémie munie d'une vanne rotative qui est agencée pour libérer une quantité prédéfinie de perlite crue qui, par l'effet de gravité, atteint une paroi vibrante descendante dont une partie s'étend dans ledit four (dans sa partie haute) afin de permettre la mise en contact avec ladite flamme. En effet, la perlite crue approvisionnée atteint le bas du four où est logée la flamme.

Le contrôle de la quantité de perlite permet d'assurer un procédé stable mis en œuvre préférentiellement en continu. Il est donc possible d'assurer une alimentation contrôlée et régulière du four.

Avantageusement, l'étape de chauffage conduit à la formation de ladite fraction fine dont la distribution de taille de particule est inférieure à 90 µm.

De préférence, la fraction fine présente une distribution de taille de particule inférieure à 90 µm.

Préférentiellement, le procédé est mis en œuvre de façon que l'étape d'approvisionnement de la perlite crue dans le four soit réalisée avec une perlite dont au moins 70 % en poids, de préférence au moins 80 % en poids, plus préférentiellement 85 % en poids présentent une distribution de taille de particule supérieure à 200 µm.

Plus préférentiellement encore, ladite perlite crue approvisionnée présente une humidité inférieure à 0,5 % en volume. Si c'est trop humide, on perd de l'énergie dans le four et le produit final devient collant. Afin d'éviter des pertes calorifiques et éviter la formation d'agrégat dans le système d'alimentation.

La sélection de l'humidité permet de réaliser une expansion adéquate des billes de perlite.

Avantageusement, lesdites billes de perlite expansée prêtes à usage comprennent également une quantité de perlite non expansée inférieure à 0,2 % en volume par rapport au volume total desdites billes de perlite expansée.

En maintenant une quantité de perlite non expansée inférieure à 0,2 % en volume, on garantit une uniformité, une isolation optimale, une réduction de poids et une meilleure maniabilité des billes de perlite expansée, améliorant ainsi leur performance et leur polyvalence dans diverses applications.

Plus avantageusement, lesdites billes de perlite expansée prêtes à usage comprennent une quantité de perlite sur-expansée inférieure à 10 % en volume par rapport au volume total desdites billes de perlite expansée.

Limiter la quantité de perlite sur-expansée à moins de 10 % permet de garantir une stabilité mécanique, une densité uniforme, des propriétés isolantes optimales, une résistance accrue à l'humidité et une meilleure maniabilité du produit final, optimisant ainsi ses performances techniques et sa durabilité.

De manière préférée, le procédé est mis en œuvre de façon que la collecte des billes de perlite expansée fournisse des billes prêtes à usage dont au moins 75 % en poids, de préférence 80 % en poids, plus préférentiellement 85 % en poids présentent une distribution de taille de particule supérieure à 200 µm.

Cela permet de fournir des billes de perlite qui présentent les meilleures propriétés, particulièrement lorsqu'elles font partie d'une composition qui comprend du plâtre.

Selon un mode de réalisation avantageux, le procédé est mis en œuvre de façon que l'étape de collecte des billes de perlite expansée fournisse des billes prêtes à usage dont au moins 55 % en poids, de préférence 60 % en poids présentent une distribution de taille de particule supérieure à 0,5 mm. Si une trop grande proportion des billes de perlite expansée présente une distribution de taille de particule inférieure à 0,5 mm, les effets recherchés ne peuvent pas être garantis.

De manière avantageuse, caractérisé en ce que le procédé est mis en œuvre de façon que l'étape de collecte des billes de perlite expansée fournisse des billes prêtes à usage dont moins de 15 % en poids, de préférence moins de 10 % en poids présentent une distribution de taille de particule supérieure à 1,250 mm. En effet si les billes de perlite expansée présentent une distribution de taille de particule trop grossière, soit supérieure à 1,250 mm (en plus grande proportion), elles risquent de provoquer des griffures lorsqu'elles font partie d'une composition, par exemple de plâtre, et que celle-ci est appliquée sur un support.

De préférence, caractérisé en ce que le procédé est mis en œuvre de façon que l'étape de collecte des billes de perlite expansée fournisse lesdites billes de perlite expansée prêtes à usage avec une densité comprise entre 40 et 80 kg/m³, de préférence entre 50 et 65 kg/m³.

Les billes de perlite expansée avec une densité comprise entre 40 et 80 kg/m³, et préférentiellement entre 50 et 65 kg/m³, offrent des avantages en termes de légèreté, résistance mécanique, isolation thermique et acoustique, résistance à l'humidité et facilité d'intégration dans diverses applications industrielles et de construction.

Plus préférentiellement, après le transport desdites billes de perlite expansée jusqu'audit silo de réception, un dosage volumétrique desdites billes de perlite expansée est réalisé pour les mélanger à une composition qui comprend du plâtre.

Cela permet de fournir une solution aisée à mettre en œuvre en fonction du type de composition finale, avantageusement du plâtre. En fonction de l'application finale, les quantités de billes de perlite expansée sont ajustées afin de pouvoir fournir une composition qui présentent les propriétés souhaitées.

Le dosage volumétrique précis garantit une proportion exacte des billes de perlite expansée dans le mélange de plâtre. Cela permet d'obtenir des propriétés constantes et homogènes dans le produit final, qu'il s'agisse d'enduits légers, de mortiers isolants ou de plaques de plâtre renforcées. La précision du dosage contribue ainsi à une meilleure qualité du matériau fini, avec des performances optimisées en termes de poids, d'isolation thermique et de résistance mécanique.

Plus préférentiellement encore, ledit dosage volumétrique comprend les étapes suivantes :
- Mise à disposition d'un boiler qui comprend en son sein une crémaillère agencée pour déplacer une sonde entre une position minimale et une position maximale, ladite position minimale correspondant à un niveau de remplissage égal à 0% en volume, où ledit boiler est vide et ladite position maximale correspondant à un niveau de remplissage égal à 100 % en volume, où ledit boiler est complètement rempli desdites billes de perlite expansée.

Le dosage volumétrique avec un boiler équipé d'une crémaillère et d'une sonde offre des avantages tels que la précision du dosage, la flexibilité opérationnelle, l'efficacité du mélange, l'automatisation et la reproductibilité, permettant ainsi d'optimiser la qualité et la performance des produits à base de plâtre et de perlite expansée.

Avantageusement, lesdites billes de perlite expansée sont introduites dans ledit boiler dans une quantité prédéterminée, de préférence une quantité comprise entre 0,5 et 50 % en volume par rapport au volume total dudit boiler, avantageusement en fonction de la composition de plâtre voulue, de manière automatisée.

De préférence, le procédé selon l'invention comprend une étape d'addition desdites billes de perlite expansée et dosées à une composition qui comprend du plâtre.

Plus avantageusement, le procédé est mis en œuvre de façon que l'addition des billes de perlite expansée à la composition comprenant du plâtre soit réalisée de manière à obtenir, lors de l'application de ladite composition sur un support, des billes de perlite expansée dont au moins 15 % en poids, de préférence au moins 20 % en poids, plus préférentiellement au moins 30 % en poids, avantageusement au moins 40 % en poids restent actives, le pourcentage en poids étant défini par rapport à la quantité initiale de billes de perlite incluses dans ladite composition.

L'avantage de maintenir au moins 15 % en poids, de préférence au moins 20 % en poids, plus préférentiellement au moins 30 % en poids, avantageusement au moins 40 % en poids des billes de perlite expansée actives dans une composition qui comprend du plâtre lorsqu'elle est appliquée sur un support réside principalement dans l'optimisation des propriétés fonctionnelles du plâtre, de l'enduit ou du matériau final.

Ces billes de perlite expansée dites « actives » conservent leurs propriétés physiques et mécaniques après mélange avec le plâtre, ce qui leur permet de jouer pleinement leur rôle d'améliorant. Elles contribuent notamment à réduire la densité globale de la composition, rendant le plâtre plus léger et donc plus facile à manipuler et à appliquer sur le support. Cela diminue également le poids exercé sur les structures, un avantage important pour des applications comme les enduits pour plafonds, les cloisons sèches ou les structures à charge limitée.

La présence d'un pourcentage significatif de billes de perlite actives permet également de maintenir d'excellentes propriétés d'isolation thermique et acoustique. Grâce à leur structure poreuse et leur capacité à piéger l'air, ces billes limitent les transferts de chaleur et atténuent les bruits. Cela améliore le confort thermique et acoustique des bâtiments où le plâtre est appliqué.

Enfin, ce pourcentage optimal de billes actives assure une mise en œuvre simplifiée et une répartition homogène des billes dans la matrice de plâtre, évitant les problèmes de ségrégation des composants et garantissant une performance constante sur l'ensemble du support traité.

Plus avantageusement encore, ledit flux de gaz et ladite fraction fine qui comprend des particules fines et des poussières provenant dudit four sont refroidis, après l'étape de séparation, de préférence avec un échangeur de chaleur, en abaissant leur température à une valeur comprise entre 160 et 190 °C, de préférence entre 170 et 180 °C, avant d'entrer dans un filtre.

Cela permet d'améliorer l'efficacité du filtrage tout en protégeant les équipements en aval. De plus, ce refroidissement optimise également le piégeage des particules fines. À des températures plus basses, les particules sont moins susceptibles de traverser le filtre, ce qui améliore l'efficacité de la collecte des poussières.

De préférence, ledit procédé selon l'invention comprend un passage de ladite fraction fine dans ledit filtre, de préférence un filtre à manche, et récupération de ladite fraction fine.

Plus préférentiellement, ladite fraction fine récupérée est réintroduite après l'étape de séparation.

Plus préférentiellement encore, ledit flux de gaz généré lors de l'étape de mise en contact est aspiré par un ventilateur localisé au niveau dudit filtre.

En aspirant directement au niveau du filtre, le ventilateur facilite le piégeage des particules fines et des poussières contenues dans le flux de gaz. Cela garantit que les particules sont immédiatement dirigées vers le filtre pour être capturées, améliorant ainsi l'efficacité de filtration.

D'autres formes de réalisation du procédé selon l'invention sont indiquées dans les revendications annexées.

L'invention concerne également un dispositif pour transporter des billes de perlite expansée prévues pour une composition qui comprend du plâtre, ledit dispositif comprenant :
- Un four muni d'une flamme qui est située en partie basse de celui-ci et qui présente une température comprise entre 900 et 1400 °C, de préférence environ 1200 °C, ledit four étant agencé pour être approvisionné en perlite crue et agencé pour former des billes de perlite expansée,
- Un module d'approvisionnement qui comprend une trémie munie d'une vanne rotative qui est agencée pour libérer une quantité prédéfinie de perlite crue, ladite trémie étant suivie d'une paroi vibrante descendante vers la partie basse dudit four et dont une partie s'étend dans ledit four,
- Un module de séparation granulométrique agencé pour séparer des billes de perlite expansée et une fraction fine,
- Un module de collecte, de préférence comprenant une trémie,
- Un module de transport relié au module de collecte comprenant un élévateur muni d'au moins une chaîne à godets agencée pour transporter les billes de perlite expansée jusqu'à un silo de réception,
ledit **module de** transport comprend au moins 3 zones de transport : la première zone étant plane ou (et puis) ascendante, la deuxième zone étant plane et la troisième zone étant descendante, toutes définies par rapport au niveau du sol, et en ce que ladite première zone est reliée audit module de collecte et en ce que ladite troisième zone est reliée audit silo de réception.

De façon plus préférée, ledit module de transport s'étend sur 4 zones de transport : la première zone étant plane, la deuxième zone étant ascendante, la troisième zone étant plane et la quatrième zone étant descendante, toutes définies par rapport au niveau du sol, et en ce que ladite quatrième zone est reliée audit silo de réception.

De préférence, le dispositif comprend un module de dosage volumétrique situé après le silo de réception et un module de mélange agencé pour fournir une composition qui comprend du plâtre et des billes de perlite expansée.

Il est à noter que toutes les caractéristiques liées au procédé peuvent être transposée audit dispositif. Ainsi, tous les paragraphes précédents peuvent également s'appliquer au dispositif.

D'autres formes de réalisation du dispositif selon l'invention sont indiquées dans les revendications annexées.

L'invention se rapporte aussi à une utilisation des billes de perlite expansée fournies selon le procédé selon la présente invention dans une composition de plâtre.

D'autres formes de réalisation de cette utilisation selon l'invention sont indiquées dans les revendications annexées.

Dans le cadre de la présente invention, les billes de perlite expansée peuvent être ajoutée à une composition destinée au génie civil ou à la construction. De préférence, les billes de perlite expansée font partie d'une composition qui comprend du plâtre, ce qui sera particulièrement préféré. Il est avantageux de les intégrer dans des enduits légers, mortiers isolants, plaques de plâtre renforcées, plâtre à projeter ou tout autre matériau dont les propriétés sont améliorées grâce à la présence des billes de perlite expansée selon l'invention.

Il est à noter que l'expression « composition comprenant du plâtre » peut être remplacée par « composition de plâtre ». Cette dernière peut comprendre divers additifs, formulants connus de la personne du métier.

Dans le cadre de la présente invention, l'expression « fraction fine » désigne une fraction qui comprend des particules fines et des poussières qui ont été produites lors de l'étape de chauffage de la perlite crue. Cette fraction est dite fine par rapport à la taille des billes de perlite expansée.

De préférence, le procédé selon la présente invention peut être mis en œuvre grâce à un dispositif qui comprend au moins un four et plusieurs modules.

Un module d'approvisionnement qui comprend avantageusement une trémie munie d'une vanne rotative.

Un module de séparation qui comprend de préférence une cuve pour recevoir la fraction fine et le flux de gaz.

Un module de collecte qui comprend avantageusement une cuve de collecte pour les billes de perlite expansée.

Un module de transport qui comprend l'élévateur muni d'au moins une chaîne à godet et du silo de réception.

Le four est de préférence un four vertical qui comprend une partie basse au niveau de sa base qui est en contact avec le sol et une partie haute située au niveau du sommet dudit four. En partie basse se situe la flamme qui fonctionne à une température comprise entre 900 et 1400 °C, de préférence environ 1200 °C.

De préférence, le module d'approvisionnement qui comprend une trémie munie d'une vanne rotative et qui comprend également une paroi vibrante descendante en direction de la partie basse dudit four et dont une partie s'étend dans ledit four. Ladite trémie étant agencée pour libérer une quantité prédéfinie de perlite crue. La paroi vibrante permet d'amener la perlite crue au contact avec la flamme.

Un module de séparation granulométrique qui permet de séparer des billes de perlite expansée et une fraction fine.

Un module de collecte, de préférence comprenant une trémie.

Un module de transport relié au module de collecte comprenant un élévateur muni d'au moins une chaîne à godets agencée pour transporter les billes de perlite expansée jusqu'à un silo de réception.

Ledit module de transport comprend au moins 3 zones de transport : la première zone étant plane ou (et puis) ascendante, la deuxième zone étant plane et la troisième zone étant descendante, toutes définies par rapport au niveau du sol, et en ce que ladite première zone est reliée audit module de collecte et en ce que ladite troisième zone est reliée audit silo de réception.

Un module de dosage volumétrique permet de réaliser des mélanges, par exemple prédéfinir la quantité précise à ajouter à une composition de plâtre pour répondre à un cahier des charges en termes de propriétés mécaniques, tout en tenant compte de l'application finale. Ce module comprend un boiler, une crémaillère et une sonde.

Le dispositif selon l'invention peut également inclure un module de dosage volumétrique situé après le silo de réception et un module de mélange agencé pour fournir une composition qui comprend du plâtre et des billes de perlite expansée.

En pratique et selon un mode de réalisation qui permet d'assimiler le procédé selon l'invention. Une quantité de perlite crue est alimentée dans la trémie dudit module d'approvisionnement et la vanne rotative associée est opérée de manière automatique en fonction de la quantité de perlite crue à approvisionner dans ledit four. Ainsi, lorsque la quantité est libérée, la perlite crue tombe sur la paroi vibrante descendante pour alimenter le fond du four (partie basse). La flamme présente une température comprise entre 900 et 1400 °C, de préférence environ 1200 °C

De cette façon, la perlite crue entre en contact avec la flamme afin de pouvoir procéder à l'expansion des billes de perlite. La mise en contact génère un flux de gaz qui comprend de l'air et des gaz résultant de la combustion de la perlite crue. La perlite crue est chauffée jusqu'à atteindre une température comprise entre 700 et 760 °C, de préférence une température comprise entre 720 et 740 °C afin de réaliser son expansion.

Le flux de gaz généré remonte vers la partie haute du four (jusqu'au sommet) et entraîne avec lui une fraction fine et des billes de perlite expansée. Lesdites billes de perlite expansée qui atteignent la partie haute dudit four présentent une température comprise entre 630 et 720 °C, de préférence entre 640 et 700 °C, plus préférentiellement entre 645 et 665 °C, de préférence en sortie dudit four. En effet, plus les billes de perlite montent vers le sommet du four, plus elles se refroidissent.

Ladite fraction fine ainsi formée, et présentée dans le cadre de l'invention, est fine par rapport auxdites billes de perlite expansée.

Une séparation granulométrique entre lesdites billes de perlite expansée et ladite fraction fine est réalisée dans le module de séparation. Cette séparation est avantageusement réalisée avec un séparateur prévu pour simuler un vortex ou avec un séparateur à cyclone.

Cela permet de récupérer la fraction fine qui présente avantageusement une distribution de taille de particule inférieure à 90 µm.

D'un côté est récupérée la fraction fine et de l'autre la matière d'intérêt, les billes de perlite expansée.

Ainsi, une collecte desdites billes de perlite expansée est réalisée, par exemple dans une trémie de collecte.

Ensuite, le transport est effectué grâce à un élévateur muni d'au moins une chaîne à godets. Cet élévateur va permettre d'assurer un transport soigné, stable et efficace jusqu'au silo de réception où lesdites billes de perlite sont prêtes à usage.

L'élévateur muni de ladite au moins une chaîne à godets s'étend sur au moins 3 zones de transport, la première zone étant plane ou (et puis) ascendante, la deuxième zone étant plane et la troisième zone étant descendante, toutes définies par rapport au niveau du sol, et en ce que ladite troisième zone est reliée audit silo de réception.

Les billes de perlite obtenues dans le silo de réception présentent les caractéristiques suivantes prises isolément ou en combinaison :
- Au moins 70 % en poids, de préférence au moins 80 % en poids, plus préférentiellement 85 % en poids de ladite perlite crue approvisionnée présente une distribution de taille de particule qui est supérieure à 200 µm,
- Ladite perlite crue approvisionnée présente une humidité inférieure à 0,5 % en volume,
- Lesdites billes de perlite expansée prêtes à usage comprennent également une quantité de perlite non expansée inférieure à 0,2 % en volume par rapport au volume total desdites billes de perlite expansée,
- Lesdites billes de perlite expansée prêtes à usage comprennent une quantité de perlite sur-expansée inférieure à 10 % en volume par rapport au volume total desdites billes de perlite expansée,
- Au moins 75 % en poids, de préférence 80 % en poids, plus préférentiellement 85 % en poids desdites billes de perlite expansée prêtes à usage présentent une distribution de taille de particule supérieure à 200 µm,
- Au moins 55 % en poids, de préférence 60 % en poids desdites billes de perlite expansée prêtes à usage présentent une distribution de taille de particule supérieure à 0,5 mm,
- Moins de 15 % en poids, de préférence moins de 10 % en poids desdites billes de perlite expansée prêtes à usage présentent une distribution de taille de particule supérieure à 1,250 mm,
- Lesdites billes de perlite expansée prêtes à usage présentent une densité comprise entre 40 et 80 kg/m³, de préférence entre 50 et 65 kg/m³.

Après le transport desdites billes de perlite expansée jusqu'audit silo de réception, un dosage volumétrique desdites billes de perlite expansée est réalisé pour les mélanger à une composition qui comprend du plâtre. Ce dosage volumétrique peut être réalisé dans le module de dosage qui comprend un boiler qui comprend en son sein une crémaillère et une sonde. La sonde est déplaçable entre une position minimale (0 % de remplissage dudit boiler) et une position maximale (100 % en volume de remplissage dudit boiler).

Ainsi, si 20 % en volume doit être utilisé pour 1 T de plâtre, la sonde est automatiquement mise à 20 % du volume du boiler afin de doser et prélever la quantité nécessaire. Ensuite, le mélange avec le plâtre peut être réalisé, le plâtre étant un exemple facultatif.

Si une composition de plâtre doit comprendre plus ou moins de billes de perlite expansée, le module de dosage volumétrique (lire la sonde) sera configuré de manière automatique afin de doser une prochaine quantité en fonction du type de composition.

Le dosage volumétrique tel que décrit dans le cadre de l'invention permet d'ajuster de manière automatique le dosage des billes de perlite de manière flexible et aisée.

Lorsque les billes de perlite sont dosées et mélangées à une composition de plâtre, il a été constaté qu'au moins 15 % en poids desdites billes de perlite expansée restent actives dans ladite composition lorsque celle-ci est appliquée sur un support, le pourcentage en poids étant défini par rapport à la quantité initiale de billes de perlite dans ladite composition qui comprend du plâtre.

S'agissant de la fraction fine séparée ci-avant, celle-ci est avantageusement aspirée par un ventilateur situé au niveau d'un filtre, de préférence un filtre à manche. Cette fraction fine récupérée et filtrée est ensuite réintroduite après l'étape de séparation.

Il est à noter que les modules présentés ci-avant peuvent être indiqués dans le procédé selon l'invention, si nécessaire, dans le cadre de la présente invention.

Les articles « un » et « une » sont utilisés ici pour faire référence à un ou plus d'un (à savoir, à au moins un) des objets grammaticaux de l'article et peuvent être remplacés par un article qui désigne un pluriel comme au « moins 2 », « au moins 3», « plusieurs » etc.

Les expressions « dans un mode de réalisation », « selon un mode de réalisation » et autres signifient généralement que la particularité, structure ou caractéristique particulière suivant l'expression est incluse dans au moins un mode de réalisation de la présente divulgation, et peut être incluse dans plus d'un mode de réalisation de la présente divulgation. Il est important de noter que de telles expressions ne font pas nécessairement référence au même mode de réalisation.

Si le texte indique qu'un composant ou une particularité «peut», ou « pourrait » être incluse ou avoir une caractéristique, il n'est pas nécessaire que ce composant ou cette particularité particulier (particulière) soit inclus(e) ou ait la caractéristique.

S'il apparait ici, le terme « comprenant » ou « contenant » et les dérivés de ceux-ci ne sont pas destinés à exclure la présence d'un quelconque composant, étape ou procédure additionnel, que celui-ci soit divulgué ou non ici. Afin d'éviter tout doute, le terme « comprenant » peut inclure tout élément / additif, adjuvant ou composé additionnel, sauf indication contraire. Par contraste, le terme « essentiellement constitué de », s'il apparait ici, exclut de la portée de toute citation suivante tout autre composant, étape ou procédure, à l'exception de ceux qui ne sont pas essentiels à l'opérabilité et le terme « constitué de », s'il est utilisé, exclut tout composant, étape ou procédure non spécifiquement défini ou indiqué. Les termes « ou » et « et/ou », sauf indication contraire, font référence aux membres indiqués individuellement ainsi que dans toute combinaison. Par exemple, l'expression A et/ou B fait référence à A seul, à B seul, ou à A et B. De plus, le terme et tout équivalent à «comprenant» peut être remplacé par « constitué de ».

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé pour transporter des billes de perlite expansée prévues pour une composition qui comprend du plâtre, ledit procédé comprenant les étapes suivantes :
- Approvisionnement de perlite crue dans un four muni d'une flamme qui est située en partie basse du four et qui présente une température comprise entre 900 et 1400 °C, de préférence environ 1200 °C,
- Mise en contact de ladite perlite crue approvisionnée avec ladite flamme dudit four avec formation d'un flux de gaz ascendant par rapport au sens d'approvisionnement de ladite perlite crue,
- Chauffage de ladite perlite crue jusqu'à ce qu'elle atteigne une température comprise entre 700 et 760 °C, de préférence une température comprise entre 720 et 740 °C, formant des billes de perlite expansée et une fraction fine, par rapport auxdites billes de perlite expansée, et entrainement de celles-ci par ledit flux de gaz formé vers la partie haute du four, située à l'opposé de ladite flamme,
- Séparation granulométrique entre lesdites billes de perlite expansée et ladite fraction fine,
- Collecte desdites billes de perlite expansée et transport de celles-ci sur un élévateur muni d'au moins une chaîne à godets jusqu'à un silo de réception où lesdites billes de perlite sont prêtes à usage,
**caractérisé en ce que** ledit procédé est mis en œuvre de façon que l'étape de transport des billes de perlite expansée soit réalisée au moyen d'un élévateur muni d'au moins une chaîne à godets s'étendant sur au moins trois zones de transport définies par rapport au niveau du sol, dont une première zone plane ou ascendante, une deuxième zone plane et une troisième zone descendante, la troisième zone étant reliée au silo de réception.

2. Procédé selon l'une quelconque des revendications précédentes, **caractérisé en ce que**, l'étape de chauffage de ladite perlite crue est mise en œuvre de façon que les billes de perlite expansée formées et entraînées par ledit flux de gaz jusqu'à la partie haute du four présentent, à leur arrivée en partie haute dudit four, une température comprise entre 630 et 720 °C, de préférence entre 640 et 700 °C, plus préférentiellement entre 645 et 665 °C, de préférence en sortie dudit four.

3. Procédé selon l'une quelconque des revendications précédentes, **caractérisé en ce que** ladite séparation est réalisée avec un séparateur prévu pour simuler un vortex ou avec un séparateur à cyclone.

4. Procédé selon l'une quelconque des revendications précédentes, **caractérisé en ce que** l'étape de chauffage conduit à la formation de ladite fraction fine dont la distribution de taille de particule est inférieure à 90 µm.

5. Procédé selon l'une quelconque des revendications précédentes, **caractérisé en ce que**, le procédé est mis en œuvre de façon que la collecte des billes de perlite expansée fournisse des billes prêtes à usage dont au moins 75 % en poids, de préférence 80 % en poids, plus préférentiellement 85 % en poids présentent une distribution de taille de particule supérieure à 200 µm.

6. Procédé selon l'une quelconque des revendications précédentes, **caractérisé en ce que**, le procédé est mis en œuvre de façon que l'étape de collecte des billes de perlite expansée fournisse des billes prêtes à usage dont au moins 55 % en poids, de préférence 60 % en poids présentent une distribution de taille de particule supérieure à 0,5 mm

7. Procédé selon l'une quelconque des revendications précédentes, **caractérisé en ce que** le procédé est mis en œuvre de façon que l'étape de collecte des billes de perlite expansée fournisse des billes prêtes à usage dont moins de 15 % en poids, de préférence moins de 10 % en poids présentent une distribution de taille de particule supérieure à 1,250 mm.

8. Procédé selon l'une quelconque des revendications précédentes, **caractérisé en ce que**, après le transport desdites billes de perlite expansée jusqu'audit silo de réception, un dosage volumétrique desdites billes de perlite expansée est réalisé pour les mélanger à une composition qui comprend du plâtre.

9. Procédé selon l'une quelconque des revendications précédentes, **caractérisé en ce que** ledit dosage volumétrique comprend les étapes suivantes :
- Mise à disposition d'un boiler qui comprend en son sein une crémaillère agencée pour déplacer une sonde entre une position minimale et une position maximale, ladite position minimale correspondant à un niveau de remplissage égal à 0% en volume, où ledit boiler est vide, et ladite position maximale correspondant à un niveau de remplissage égal à 100 % en volume, où ledit boiler est complètement rempli desdites billes de perlite expansée.

10. Procédé selon l'une quelconque des revendications précédentes, **caractérisé en ce que** ledit flux de gaz et ladite fraction fine qui comprend des particules fines et des poussières provenant dudit four sont refroidis, après l'étape de séparation, de préférence avec un échangeur de chaleur, en abaissant leur température à une valeur comprise entre 160 et 190 °C, de préférence entre 170 et 180 °C, avant d'entrer dans un filtre.

11. Procédé selon la revendication 10, comprenant un passage de ladite fraction fine dans ledit filtre, de préférence un filtre à manche, et récupération de ladite fraction fine.

12. Procédé selon la revendication 11, **caractérisé en ce que** ladite fraction fine récupérée est réintroduite après ladite étape de séparation.

13. Dispositif pour transporter des billes de perlite expansée prévues pour une composition qui comprend du plâtre selon le procédé décrit dans l'une quelconque des revendications précédentes, ledit dispositif comprenant :
- Un four muni d'une flamme qui est située en partie basse de celui-ci et qui présente une température comprise entre 900 et 1400 °C, de préférence environ 1200 °C, ledit four étant agencé pour être approvisionné en perlite crue et agencé pour former des billes de perlite expansée,
- Un module d'approvisionnement qui comprend une trémie munie d'une vanne rotative qui est agencée pour libérer une quantité prédéfinie de perlite crue, ladite trémie étant suivie d'une paroi vibrante descendante vers la partie basse dudit four et dont une partie s'étend dans ledit four,
- Un module de séparation granulométrique agencé pour séparer des billes de perlite expansée et une fraction fine,
- Un module de collecte, de préférence comprenant une trémie,
- Un module de transport relié au module de collecte comprenant un élévateur muni d'au moins une chaîne à godets agencée pour transporter les billes de perlite expansée jusqu'à un silo de réception,
**caractérisé en ce que** ledit module de transport comprend au moins 3 zones de transport : la première zone étant plane ou (et puis) ascendante, la deuxième zone étant plane et la troisième zone étant descendante, toutes définies par rapport au niveau du sol, et **en ce que** ladite première zone est reliée audit module de collecte et **en ce que** ladite troisième zone est reliée audit silo de réception.

## Patentansprüche

1. Verfahren zum Transportieren von expandierten Perlitkugeln, die für eine Zusammensetzung vorgesehen sind, die Gips umfasst, das Verfahren umfassend die folgenden Schritte:
- Beschicken mit Rohperlit eines Ofens, der mit einer Flamme versehen ist, die sich in dem unteren Teil des Ofens befindet und die eine Temperatur zwischen 900 und 1400 °C, vorzugsweise etwa 1200 °C, aufweist,
- Inkontaktbringen des beschickten Rohperlits mit der Flamme des Ofens unter Bildung eines Gasstroms, der in Bezug auf die Beschickungsrichtung des Rohperlits aufsteigt,
- Erhitzen des Rohperlits, bis es eine Temperatur zwischen 700 und 760 °C, vorzugsweise eine Temperatur zwischen 720 und 740 °C, erreicht, wobei expandierte Perlitkugeln und eine in Bezug auf die expandierten Perlitkugeln feine Fraktion entstehen und deren Befördern durch den gebildeten Gasstrom zu dem oberen Teil des Ofens, der sich gegenüber der Flamme befindet,
- Granulometrisches Abscheiden zwischen den expandierten Perlitkugeln und der feinen Fraktion,
- Sammeln der expandierten Perlitkugeln und deren Transportieren über einen Elevator, der mit mindestens einer Becherkette versehen ist, zu einem Aufnahmesilo, wo die Perlitkugeln gebrauchsbereit sind,
**dadurch gekennzeichnet, dass** das Verfahren durchgeführt wird, sodass der Transportschritt der expandierten Perlitkugeln mittels eines Elevators erfolgt, der mit mindestens einer Becherkette versehen ist, die sich über mindestens drei Transportbereiche erstreckt, die in Bezug auf die Bodenebene definiert sind, darunter ein erster ebener oder ansteigender Bereich, ein zweiter ebener Bereich und ein dritter abfallender Bereich, wobei der dritte Bereich mit dem Aufnahmesilo verbunden ist.

2. Verfahren nach einem der vorherigen Ansprüche, **dadurch gekennzeichnet, dass** der Schritt eines Erhitzens des Rohperlits durchgeführt wird, sodass die gebildeten expandierten Perlitkugeln, die von dem Gasstrom bis zu dem oberen Teil des Ofens mitgeführt werden, bei ihrer Ankunft in dem oberen Teil des Ofens eine Temperatur zwischen 630 und 720 °C, vorzugsweise zwischen 640 und 700 °C, bevorzugter zwischen 645 und 665 °C, aufweisen, vorzugsweise an dem Ausgang des Ofens.

3. Verfahren nach einem der vorherigen Ansprüche, **dadurch gekennzeichnet, dass** das Abscheiden mit einem Abscheider, der bereitgestellt ist, um einen Wirbel zu simulieren, oder mit einem Zyklonabscheider erfolgt.

4. Verfahren nach einem der vorherigen Ansprüche, **dadurch gekennzeichnet, dass** der Erhitzungsschritt zur Bildung der feinen Fraktion führt, deren Partikelgrößenverteilung kleiner als 90 µm ist.

5. Verfahren nach einem der vorherigen Ansprüche, **dadurch gekennzeichnet, dass** das Verfahren durchgeführt wird, sodass das Sammeln der expandierten Perlitkugeln gebrauchsfertige Kugeln ergibt, wovon mindestens 75 Gew.-%, vorzugsweise 80 Gew.-%, bevorzugter 85 Gew.-% eine Partikelgrößenverteilung größer als 200 µm aufweisen.

6. Verfahren nach einem der vorherigen Ansprüche, **dadurch gekennzeichnet, dass** das Verfahren durchgeführt wird, sodass der Sammelschritt der expandierten Perlitkugeln gebrauchsfertige Kugeln ergibt, wovon mindestens 55 Gew.-%, vorzugsweise 60 Gew.-%, eine Partikelgrößenverteilung größer als 0,5 mm aufweisen.

7. Verfahren nach einem der vorherigen Ansprüche, **dadurch gekennzeichnet, dass** das Verfahren durchgeführt wird, sodass der Sammelschritt der expandierten Perlitkugeln gebrauchsfertige Kugeln ergibt, wovon weniger als 15 Gew.-%, vorzugsweise weniger als 10 Gew.-%, eine Partikelgrößenverteilung größer als 1,250 mm aufweisen.

8. Verfahren nach einem der vorherigen Ansprüche, **dadurch gekennzeichnet, dass** nach dem Transport der expandierten Perlitkugeln zu dem Aufnahmesilo eine volumetrische Dosierung der expandierten Perlitkugeln erfolgt, um sie mit einer Zusammensetzung zu mischen, die Gips umfasst.

9. Verfahren nach einem der vorherigen Ansprüche, **dadurch gekennzeichnet, dass** die volumetrische Dosierung die folgenden Schritte umfasst:
- Bereitstellen eines Boilers, der in seinem Inneren eine Zahnstange enthält, die ausgebildet ist, um einen Fühler zwischen einer Minimalposition und einer Maximalposition zu bewegen, wobei die Minimalposition einem Füllstand von 0 % des Volumens entspricht, wo der Boiler ist leer, und die Maximalposition einem Füllstand von 100 % des Volumens entspricht, wo der Boiler vollständig mit den expandierten Perlitkugeln gefüllt ist.

10. Verfahren nach einem der vorherigen Ansprüche, **dadurch gekennzeichnet, dass** der Gasstrom und die feine Fraktion, die feine Partikel und Staub, der aus dem Ofen stammt, umfasst, nach dem Abscheideschritt vorzugsweise mit einem Wärmetauscher abgekühlt werden, wobei ihre Temperatur auf einen Wert zwischen 160 und 190 °C, vorzugsweise zwischen 170 und 180 °C, gesenkt wird, bevor sie in einen Filter eintreten.

11. Verfahren nach Anspruch 10, umfassend einen Durchlauf der feinen Fraktion durch den Filter, vorzugsweise einen Schlauchfilter, und Rückgewinnung der feinen Fraktion.

12. Verfahren nach Anspruch 11, **dadurch gekennzeichnet, dass** die rückgewonnene feine Fraktion nach dem Abscheideschritt wieder zugeführt wird.

13. Vorrichtung zum Transportieren von expandierten Perlitkugeln, die für eine Zusammensetzung vorgesehen sind, die Gips umfasst, gemäß dem in einem der vorherigen Ansprüche beschriebenen Verfahren, die Vorrichtung umfassend:
- einen Ofen, der mit einer Flamme versehen ist, die sich in dem unteren Teil von diesem befindet und die eine Temperatur zwischen 900 und 1400 °C, vorzugsweise etwa 1200 °C, aufweist, wobei der Ofen ausgebildet ist, um mit Rohperlit beschickt zu werden und ausgebildet ist, um expandierte Perlitkugeln zu bilden,
- ein Beschickungsmodul, das einen Trichter umfasst, der mit einem Drehschieber versehen, der ausgebildet ist, um eine vordefinierte Menge an Rohperlit freizugeben, wobei sich an den Trichter eine Rüttelwand anschließt, die zu dem unteren Teil des Ofens absteigt und wovon sich ein Teil in den Ofen erstreckt,
- ein granulometrisches Abscheidemodul, das ausgebildet ist, um Perlitkugeln und eine feine Fraktion abzuscheiden,
- ein Sammelmodul, vorzugsweise umfassend einen Trichter,
- ein Transportmodul, das mit dem Sammelmodul verbunden ist, umfassend einen Elevator, der mit mindestens einer Becherkette versehen ist, die ausgebildet ist, um die expandierten Perlitkugeln zu einem Aufnahmesilo zu transportieren,
**dadurch gekennzeichnet, dass** das Transportmodul mindestens drei Transportbereiche umfasst: den ersten Bereich, der eben oder (und dann) ansteigend ist, den zweiten Bereich, der eben ist, und den dritten Bereich, der absteigend ist, wobei alle in Bezug auf die Bodenebene definiert sind, und dass der erste Bereich mit dem Sammelmodul verbunden ist und dass der dritte Bereich mit dem Aufnahmesilo verbunden ist.

## Claims

1. Method for transporting expanded perlite beads intended for a composition comprising plaster, said method comprising the following steps:
- Supplying raw perlite to a furnace provided with a flame which is located in the lower part of the furnace and which has a temperature of between 900 and 1400 °C, preferably approximately 1200 °C;
- Bringing said supplied raw perlite into contact with said flame of said furnace with the formation of a gas flow ascending relative to the direction in which said raw perlite is supplied,
- Heating said raw perlite until it reaches a temperature of between 700 and 760 °C, preferably a temperature of between 720 and 740 °C, forming expanded perlite beads and a fine fraction, relative to said expanded perlite beads, and the carrying of the latter by said gas flow towards the upper part of the furnace, located opposite said flame;
- Particle-size separation of said expanded perlite beads from said fine fraction;
- Collecting said expanded perlite beads and transporting them, by means of an elevator provided with at least one bucket chain, to a receiving silo in which said perlite beads are ready for use;
**characterised in that** said method is carried out such that the step of transporting the expanded perlite beads is performed by means of an elevator provided with at least one bucket chain extending over at least three transport zones defined relative to ground level, including a first horizontal or ascending zone, a second horizontal zone and a third descending zone, the third zone being connected to the receiving silo.

2. Method according to any one of the preceding claims, **characterised in that** the step of heating said raw perlite is carried out such that the expanded perlite beads formed and carried by said gas flow to the upper part of the furnace have, upon reaching the upper part of said furnace, a temperature of between 630 and 720 °C, preferably between 640 and 700 °C, more preferably between 645 and 665 °C, preferably at the outlet of said furnace.

3. Method according to any one of the preceding claims, **characterised in that** said separation is carried out with a separator intended to simulate a vortex or with a cyclone separator.

4. Method according to any one of the preceding claims, **characterised in that** the heating step results in the formation of said fine fraction having a particle size distribution of less than 90 µm.

5. Method according to any one of the preceding claims, **characterised in that** the method is carried out such that collection of the expanded perlite beads provides beads ready for use, of which at least 75% by weight, preferably 80% by weight, more preferably 85% by weight, have a particle size distribution greater than 200 µm.

6. Method according to any one of the preceding claims, **characterised in that** the method is carried out such that the step of collecting the expanded perlite beads provides beads ready for use, of which at least 55% by weight, preferably 60% by weight, have a particle size distribution greater than 0.5 mm.

7. Method according to any one of the preceding claims, **characterised in that** the method is carried out such that the step of collecting the expanded perlite beads provides beads ready for use, of which less than 15% by weight, preferably less than 10% by weight, have a particle size distribution greater than 1.250 mm.

8. Method according to any one of the preceding claims, **characterised in that**, after transporting said expanded perlite beads to said receiving silo, volumetric dosing of said expanded perlite beads is carried out in order to mix them with a composition comprising plaster.

9. Method according to any one of the preceding claims, **characterised in that** said volumetric dosing comprises the following steps:
- Providing a boiler comprising therein a rack configured to move a probe between a minimum position and a maximum position, said minimum position corresponding to a filling level equal to 0% by volume, where said boiler is empty, and said maximum position corresponding to a filling level equal to 100% by volume, where said boiler is completely filled with said expanded perlite beads.

10. Method according to any one of the preceding claims, **characterised in that** said gas flow and said fine fraction comprising fine particles and dust originating from said furnace are cooled, after the separation step, preferably with a heat exchanger, by lowering their temperature to a value of between 160 and 190 °C, preferably between 170 and 180 °C, before entering a filter.

11. Method according to claim 10, comprising passing said fine fraction through said filter, preferably a bag filter, and recovering said fine fraction.

12. Method according to claim 11, **characterised in that** said recovered fine fraction is reintroduced after said separation step.

13. Device for transporting expanded perlite beads intended for use in a composition comprising plaster, according to the method described in any one of the preceding claims, said device comprising:
- A furnace provided with a flame which is located in a lower part thereof and which has a temperature of between 900 and 1400 °C, preferably approximately 1200 °C, said furnace being configured to be supplied with raw perlite and to form expanded perlite beads;
- A supply module comprising a hopper provided with a rotary valve configured to release a predetermined quantity of raw perlite, said hopper being followed by a vibrating wall descending towards the lower part of said furnace, a portion of said vibrating wall extending into said furnace;
- A particle-size separation module configured to separate expanded perlite beads from a fine fraction;
- A collection module, preferably comprising a hopper;
- A transport module connected to the collection module and comprising an elevator provided with at least one bucket chain configured to transport the expanded perlite beads to a receiving silo;
**characterised in that** said transport module comprises at least three transport zones, defined relative to ground level: a first zone which is horizontal or (and then) ascending, a second zone which is horizontal, and a third zone which is descending; and **in that** said first zone is connected to said collection module and said third zone is connected to said receiving silo.
